# EUROPÄISCHE PATENTSCHRIFT

(11) **EP 4 236 859 B1**
(45) Veröffentlichungstag und Bekanntmachung des Hinweises auf die Patenterteilung: **12.02.2025**
(21) Anmeldenummer: 21783165.0
(22) Anmeldetag: 22.09.2021
(51) Int. Cl.: A61C 5/42, C21D 9/00, C22C 14/00, C22C 19/05, C22F 1/18, C22C 19/03, C22F 1/10, C21D 1/60

(54) **WURZELKANALINSTRUMENT**
ROOT CANAL INSTRUMENT
INSTRUMENT RADICULAIRE

(30) Priorität: 30.10.2020 DE 102020128671
(43) Veröffentlichungstag der Anmeldung: 06.09.2023
(73) Patentinhaber: Gebr. Brasseler GmbH & Co. KG, 32657 Lemgo (DE)
(72) Erfinder: KRUMSIEK, Michael, 32657 Lemgo (DE); KÜLLMER, Michael, 32657 Lemgo (DE)
(74) Vertreter: Hoefer & Partner Patentanwälte mbB
(86) Internationale Anmeldenummer: PCT/EP2021/076044
(87) Internationale Veröffentlichungsnummer: WO 2022/089845

(56) Entgegenhaltungen:
- EP-A1- 1 759 656
- EP-A1- 3 574 865
- CN-A- 106 119 794
- US-A- 4 565 589
- US-A- 5 044 947
- US-A- 5 683 245
- US-B1- 8 192 200

## Beschreibung

Die vorliegende Erfindung betrifft ein Wurzelkanalinstrument zur Behandlung eines Wurzelkanals eines Zahns sowie ein Verfahren zu dessen Herstellung. Ferner wird auch die Verwendung einer Nickel-Titan-Legierung zur Herstellung eines Wurzelkanalinstruments beschrieben.

Wurzelkanalinstrumente sind aus dem Stand der Technik, beispielsweise aus der DE 202012012526 U1, bekannt. Wurzelkanalinstrumente müssen eine gewisse Flexibilität aufweisen, um den Bögen und Windungen eines Wurzelkanals folgen zu können, um eine entsprechende Wurzelkanalbehandlung durchführen zu können. Hierzu weisen Wurzelkanalinstrumente ausgehend von einem Arbeitsbereich des Wurzelkanalinstruments eine Seele, d.h. einen Vollmaterial-Kern, auf, welcher sich kontinuierlich in Richtung zu einem Schaftbereich des Wurzelkanalinstruments konisch erweitert. Insbesondere Backenzähne weisen ein relativ kompliziertes Wurzelkanalsystem auf, bei dem das Wurzelkanalinstrument auch kleinen Radien des Wurzelkanals folgen muss. Hierzu muss der Arbeitsbereich des Wurzelkanalinstruments noch flexibler sein. Dies wird bislang durch eine weitere Verjüngung der Seele des Wurzelkanalinstruments erzielt, was jedoch zu einer geringeren mechanischen Stabilität des Arbeitsbereichs führt und somit ein gewisses Risiko des Abbrechens eines Teils des Arbeitsbereichs während der Wurzelkanalbehandlung birgt.

EP1 759 656 A1 offenbart ein Wurzelkanalinstrument umfassend einen Schaft und einen am Schaft befestigten Arbeitsbereich, wobei der Arbeitsbereich aus einer Nickel-Titan-Legierung besteht.

US 5 044 947 A offenbart eine Ni-Ti-Cu-Legierungen für kieferorthopädische Draht, ein zusätzliches Element, ausgewählt aus Co, V, Cr, Mn, Fe, Mo, W und Al, kann hinzugefügt werden.

Es ist daher Aufgabe der vorliegenden Erfindung, ein dentales Wurzelkanalinstrument sowie ein Verfahren zu dessen Herstellung bereitzustellen, welches bei einfachem und dennoch stabilem Aufbau und einfacher, kostengünstiger Herstellbarkeit eine verbesserte Flexibilität aufweist und insbesondere auch starken Windungen eines Wurzelkanals eines Zahns folgen kann.

Diese Aufgabe wird durch ein Wurzelkanalinstrument, ein Verfahren zu dessen Herstellung sowie seine Verwendung mit den Merkmalen der unabhängigen Ansprüche gelöst. Die Unteransprüche zeigen bevorzugte Weiterbildungen der Erfindung.

Das erfindungsgemäße dentale Wurzelkanalinstrument mit den Merkmalen des Anspruchs 1 weist den Vorteil auf, dass sich das Wurzelkanalinstrument durch eine exzellente Flexibilität auszeichnet. Dadurch kann bei der Behandlung eines Wurzelkanals den Bögen und Windungen des Wurzelkanals mit dem erfindungsgemäßen Wurzelkanalinstrument, selbst bei schwer zugänglichen Backenzahnwurzelkanälen, hervorragend gefolgt werden, ohne dass ein Risiko eines Abbrechens des Arbeitsbereichs des Wurzelkanalinstruments besteht. Somit kann abgestorbenes oder infiziertes Pulpagewebe aus dem Wurzelkanal mit hoher Sicherheit vollständig entfernt werden. Dadurch gelingt eine weitestgehende Eliminierung von Mikroorganismen, welche sich im Wurzelkanal befinden.

Das Wurzelkanalinstrument umfasst einen Schaft und einen am Schaft befestigten Arbeitsbereich, wobei der Arbeitsbereich aus einer Nickel-Titan-Legierung besteht, die 38 bis 46 At% Nickel, 46 bis 53 At% Titan und 5,5 bis 8,8 At% Kupfer umfasst. Die Geometrie des Wurzelkanalinstruments kann dabei wie herkömmlich ausgebildet, also insbesondere von einem ersten Ende des Arbeitsbereichs, das mit dem Schaft verbunden ist, zu einem zweiten, freiliegenden Ende des Arbeitsbereichs, konisch zulaufend ausgebildet sein. Der Arbeitsbereich dient hierbei als Schneidebereich für den Wurzelkanal und umfasst insbesondere mehrere Schneiden, die entlang einer Seele angeordnet sind. Durch die Verwendung einer wie vorstehend definierten Nickel-Titan-Legierung wird der Arbeitsbereich aus einem hochflexiblen Material gebildet, das sich dennoch durch eine hohe mechanische Stabilität, also insbesondere eine hohe Zugspannung von mindestens 800 MPa, sowie eine hohe Biegefähigkeit bzw. großes Young Modul bei gleichzeitig guter Dehnfähigkeit auszeichnet, wodurch ein Abbrechen bei Verwendung des Wurzelkanalinstruments effektiv verhindert werden kann. Die Kupfer enthaltende Nickel-Titan-Legierung ist aufgrund ihrer physikalischen und mechanischen Eigenschaften bestens zur Bildung eines hochflexiblen Arbeitsbereichs für ein Wurzelkanalinstrument geeignet.

Erfindungsgemäß, zur Verbesserung der Dauerfestigkeit besteht die Nickel-Titan-Legierung aus 38 bis 46 At% Nickel, 46 bis 53 At% Titan, 5,5 bis 8,8 At%, Kupfer und 0,05 bis 0,15 At% Chrom.

Gemäß einer besonders bevorzugten Weiterbildung besteht die Nickel-Titan-Legierung im Wesentlichen aus 40,5 bis 43,1 At% Nickel, 48,7 bis 50,8 At% Titan, 6,3 bis 8,4 At% Kupfer und 0,08 bis 0,13 At% Chrom und insbesondere aus 42,50 At% Nickel, 49,90 At% Titan, 7,50 At% Kupfer und 0,10 At% Chrom. Hierbei bedeutet "im Wesentlichen", dass aktiv keine weiteren Legierungsmetalle oder Zusätze zugefügt werden, etwaige geringe Mengenanteile an Metallen oder Additiven jedoch in Form von Verunreinigungen der eingesetzten Materialien vorhanden sein können.

Um das Legierungsgefüge weiter zu stabilisieren umfasst die Nickel-Titan-Legierung gemäß ASTM F 2063-15 maximal 500 ppm Sauerstoff und Stickstoff und/oder maximal 500 ppm Kohlenstoff und/oder maximal 50 ppm Wasserstoff. Insbesondere liegt der Gesamtgehalt an Sauerstoff und Stickstoff unterhalb von 500 ppm, der Gehalt an Kohlenstoff unterhalb von 500 ppm und der Gehalt an Wasserstoff unterhalb von 50 ppm.

Zur Verbesserung der Biegefähigkeit des Arbeitsbereichs ist die Nickel-Titan-Legierung in einem Temperaturbereich von 350 bis 450 °C getempert. Dies bedeutet, dass die den Arbeitsbereich bildende Nickel-Titan-Legierung für eine Zeitdauer von etwa 5 min bis 4 h in einem Temperaturbereich von 350 °C bis 450 °C wärmebehandelt wurde, wodurch sich die Gitterstruktur des Legierungsgitters optimierte.

Vorteilhaft hat sich auch eine Temperaturbehandlung mittels Induktion von 1 Sekunde bis 60 Sekunden bei einer Temperatur von 500°C +- 20°C erwiesen. Auch hierdurch kann eine Verbesserung der Gitterstruktur des Legierungsgitters erzielt werden.

Weiter vorteilhaft wurde die Nickel-Titan-Legierung vor dem mechanischen Bearbeiten (also z.B. vor dem Zerspanen zur Bildung des Arbeitsbereichs) zu 21 bis 40 % und insbesondere zu 35 % kaltverfestigt.

Um neben der Biegefähigkeit auch die mechanische Stabilität im Hinblick auf eine Dehnfähigkeit zu verbessern, wodurch insbesondere einem Abbrechen des Arbeitsbereichs bei hohen Torsionskräften entgegengewirkt wird, wurde die Nickel-Titan-Legierung nach dem Wärmebehandeln bzw. Tempern auf Raumtemperatur gequencht. Unter Quenchen wird im Sinne der vorliegenden Erfindung dabei ein Abschrecken von der Tempertemperatur bzw. der Temperatur des Wärmebehandelns auf Raumtemperatur, also auf etwa 20 bis 25 °C, verstanden. Dies gelingt insbesondere durch in Kontakt bringen der getemperten bzw. wärmebehandelten Nickel-Titan-Legierung mit einem bei Raumtemperatur gehaltenen Medium. Das Medium ist im Einzelnen nicht beschränkt und kann Gase, wie Stickstoff oder Kohlenstoffdioxid, oder auch Flüssigkeiten, wie Wasser und andere inerte Lösungsmittel umfassen.

Besonders vorteilhaft wird das Quenchen in Wasser ausgeführt. Es hat sich herausgestellt, dass Wasser, aufgrund seiner hohen Wärmekapazität für eine besonders schnelle Abkühlung der Nickel-Titan-Legierung sorgt, wodurch sowohl die Biegefähigkeit als auch die Dehnfähigkeit des Arbeitsbereichs weiter verbessert werden.

Ferner vorteilhaft umfasst das Wurzelkanalinstrument in Axialrichtung Bereiche, welche mit unterschiedlichen Drallwinkeln versehen sind und die jeweils aus der Nickel-Titan-Legierung bestehen. Aufgrund der in ihrer Geometrie unterschiedlich ausgebildeten Bereiche, kann ein Arbeitsbereich geformt werden, der sich durch eine besonders stark in Richtung des zweiten, freiliegenden Endes verjüngende Form auszeichnet, die sich jedoch aufgrund der Verwendung der Nickel-Titan-Legierung durch eine ausreichend hohe mechanische Stabilität und Biegefähigkeit auszeichnet, ohne einem Risiko des Abbrechens zu unterliegen.

Ferner erfindungsgemäß wird auch ein Verfahren zur Herstellung eines wie vorstehend offenbarten Wurzelkanalinstruments beschrieben. Mit anderen Worten dient das erfindungsgemäße Verfahren dazu, das erfindungsgemäße Wurzelkanalinstrument herzustellen. Dabei umfasst das Verfahren zunächst einen Schritt des Bereitstellens einer Nickel-Titan-Legierung in Form eines Stranges, wobei die Nickel-Titan-Legierung 38 bis 46 At% Nickel, 46 bis 53 At% Titan, 5,5 bis 8,8 At% Kupfer und 0,05 bis 0,15 At% Chrom umfasst. In einem sich anschließenden Verfahrensschritt erfolgt ein Bearbeiten des Stranges, um einen Arbeitsbereich zu bilden. Das Bearbeiten kann dabei jegliches für Nickel-Legierungen geeignete Bearbeitungsverfahren, und insbesondere ein mechanisches Bearbeiten, umfassen. Nach Fertigstellung des Arbeitsbereichs wird dieser mit einem Schaft verbunden. Der Schaft ist dabei im Einzelnen nicht beschränkt und kann z.B. ebenfalls aus einem metallischen Werkstoff oder aber aus einem Kunststoff bestehen.

Die für das erfindungsgemäße Wurzelkanalinstrument beschriebenen Vorteile, vorteilhaften Effekte und Weiterbildungen finden auch Anwendung auf das erfindungsgemäße Verfahren zur Herstellung des Wurzelkanalinstruments. Zudem wird im Hinblick auf etwaige Definitionen ergänzend Bezug genommen auf die vorstehenden Erläuterungen.

Vorteilhaft im Lichte einer Verbesserung der Biegefähigkeit des Arbeitsbereichs wird die Nickel-Titan-Legierung in einem Temperaturbereich von 350 bis 450 °C getempert. Wie bereits vorstehend ausgeführt, wird zum Tempern die den Arbeitsbereich bildende Nickel-Titan-Legierung für eine Zeitdauer von etwa 5 min bis 4 h in einem Temperaturbereich von 350 °C bis 450 °C wärmebehandelt, wodurch die Gitterstruktur des Legierungsgitters optimiert werden kann. Das Tempern wird vorteilhafterweise in einem Ofen unter Sauerstoffatmosphäre ausgeführt. Eine Variante kann aber auch das Tempern im Vakuum und/oder unter Argonatmosphäre umfassen.

Gemäß einer alternativen Wärmebehandlung wird die Nickel-Titan-Legierung mittels Induktion für 1 Sekunde bis 60 Sekunden bei einer Temperatur von 500 °C +- 20 °C wärmebehandelt, was ebenfalls zur Verbesserung der Gitterstruktur des Legierungsgitters führt, jedoch wesentlich zeitsparender ist. Eine weitere vorteilhafte Weiterbildung des induktiven Erwärmens ist es, die Wärmezone lokal einzuschränken.

Weiter vorteilhaft kann die Nickel-Titan-Legierung vor dem Bearbeiten des Stranges zu 21 bis 40 %, insbesondere zu 35 % kaltverfestigt werden. Wenn das Material kaltverfestigt wird, kann sich der Temperaturbereich für die Wärmebehandlung verschieben. 30 % Kaltverfestigung führen in diesem Falle zu einer um etwa 100 °C höheren Temperatur bei der Wärmebehandlung.

Ferner vorteilhaft erfolgt im Anschluss an das Tempern ein Quenchen der Nickel-Titan-Legierung, das insbesondere unter Verwendung von bei Raumtemperatur gehaltenem Wasser erfolgt. Insbesondere wird die bearbeitete Nickel-Titan-Legierung sofort nach dem Wärmebehandeln bzw. Tempern, also z.B. nach der Entnahme aus dem Ofen, mit einem bei etwa 20 bis 25 °C gehaltenen Medium, wie insbesondere Wasser, in Kontakt gebracht, wobei ein Abschrecken der Nickel-Titan-Legierung erfolgt, durch das die Gitterstruktur derart verändert wird, dass neben der Biegefähigkeit auch die mechanische Stabilität im Hinblick auf eine Dehnfähigkeit des Arbeitsbereichs verbessert wird.

Vorzugsweise erfolgt das Verbinden des Arbeitsbereichs mit dem Schaft durch Verpressen, Schweißen oder Anspritzen. Insbesondere sind die beiden erstgenannten Verfahren dann besonders geeignet, wenn der Schaft aus einem metallischen Material gebildet ist. Ein direktes Anspritzen des Schafts an den Arbeitsbereich, also an das erste Ende des Arbeitsbereichs, wird insbesondere dann ausgeführt, wenn der Schaft aus einem spritzfähigen Kunststoffmaterial besteht. Beispielsweise kommt hierbei eine Spritzgusstechnik zur Anwendung.

Ferner erfindungsgemäß wird auch die Verwendung einer Nickel-Titan-Legierung beschrieben, die im Wesentlichen aus 38 bis 46 At% Nickel, 46 bis 53 At% Titan, 5,5 bis 8,8 At% Kupfer und 0,05 bis 0,15 At% Chrom besteht, wobei der Anteil an Chrom insbesondere 0,08 bis 0,13 At% und ferner insbesondere 0,01 At% beträgt. Die Verwendung sieht vor, dass die Nickel-Titan-Legierung zur Herstellung eines Wurzelkanalinstruments eingesetzt wird, wodurch sich das Wurzelkanalinstrument durch einen besonders flexiblen und biegefähigen Arbeitsbereich auszeichnet. Auch für die erfindungsgemäße Verwendung finden die Ausführungen und vorteilhaften Weiterbildungen des erfindungsgemäßen Wurzelkanalinstruments Anwendung.

Im Folgenden wird die Erfindung anhand eines Ausführungsbeispiels in Verbindung mit der Zeichnung beschrieben. Dabei zeigt:

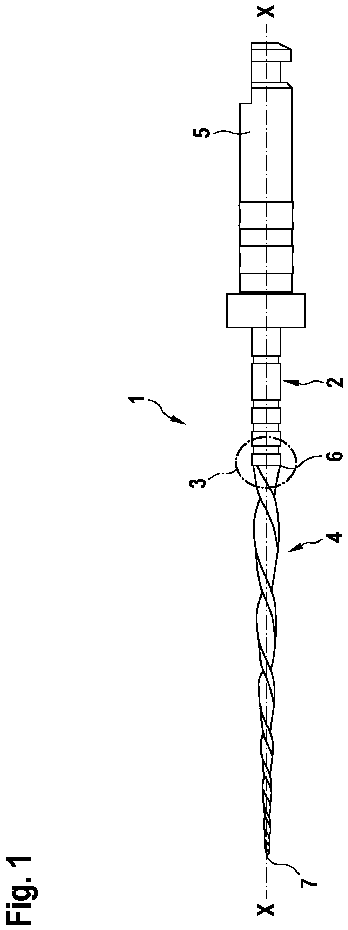

- Fig. 1: eine schematische Seitenansicht eines Wurzelkanalinstruments gemäß einer Ausführungsform der Erfindung.

Im Detail zeigt Figur 1 ein Wurzelkanalinstrument 1 mit einem Schaft 2 sowie einen mit dem Schaft 2 durch einen Verbindungsbereich 3 verbundenen Arbeitsbereich 4. An einem distalen Ende des Schafts 2 befindet sich ein Anschlussstück 5. Das Anschlussstück 5 dient dabei zur Verbindung mit einem Antrieb oder auch einem Handstück, mit welchem ein Zahnarzt das Wurzelkanalinstrument 1 bedienen kann.

Der Arbeitsbereich 4 ist als Schneidebereich anzusehen, mit dem abgestorbenes oder bakteriell infiziertes Pulpagewebe eines Wurzelkanals entfernt werden kann. Der Arbeitsbereich 4 weist ein erstes Ende 6 und ein zweites Ende 7 auf. Das erste Ende 6 ist im Verbindungsbereich 3 mit dem Schaft 2 verbunden, während das zweite Ende 7 freiliegt und eine Spitze aufweist. Insgesamt ist der Verlauf des Arbeitsbereichs 2 vom ersten Ende 6 zum zweiten Ende 7 mehr oder weniger konisch, wobei der Arbeitsbereich 2 in Axialrichtung X-X mehrere Bereiche umfasst, die mit unterschiedlichen Drallwinkeln versehen sind, wobei die Drallwinkel vom ersten Ende 6 zum zweiten Ende 7 hin abnehmen.

Der Arbeitsbereich 4 besteht aus einer Nickel-Titan-Legierung, die 38 bis 46At% Nickel, 46 bis 53 At% Titan, 5,5 bis 8,8 At% Kupfer und 0,05 bis 0,15 At% Chrom umfasst. Ferner kann die Nickel-Titan-Legierung maximal 500 ppm Sauerstoff und Stickstoff, maximal 500 ppm Kohlenstoff und maximal 50 ppm Wasserstoff umfassen. Aufgrund der Verwendung der Nickel-Titan-Legierung zeichnet sich der Arbeitsbereich 4 durch eine besonders gute Biegefähigkeit und hohe Dehnfähigkeit aus. Hierdurch wird ermöglicht, dass der Arbeitsbereich selbst in schwer zugängliche Wurzelkanäle vordringt, um von dort Gewebereste zu entfernen und einen konischen Wurzelkanal auszubilden. Aufgrund der hohen Biegefähigkeit und Dehnfähigkeit des Arbeitsbereichs 4 kann ein Durchmesser des Arbeitsbereichs 4 sehr klein ausgebildet werden, da sich der Arbeitsbereich 4 durch die Verwendung der Nickel-Titan-Legierung dennoch durch eine hohe mechanische Stabilität auszeichnet, derart, dass ein Abbrechen des Arbeitsbereichs nicht auftritt.

Vorzugsweise wird die Nickel-Titan-Legierung in einem Temperaturbereich von 350 bis 450 °C getempert und mit Wasser auf Raumtemperatur (etwa 20 bis 25 °C) gequencht, wodurch die Dehnfähigkeit und Biegefähigkeit bei gleichzeitig hoher Bruchfestigkeit verbessert werden können.

### Beispiele

Es wurden aus den in Tabelle 1 angegebenen Legierungen Arbeitsbereiche für ein Wurzelkanalinstrument hergestellt, die wie in Figur 1 gezeigt, ausgebildet sein können.

Hierzu wurden aus den angegebenen Legierungen Materialstränge hergestellt, die zunächst bei Raumtemperatur (20 bis 25 °C) gelagert wurden. Das Material war nicht kaltverfestigt. Anschließend wurden die Materialstränge für einen Zeitraum von 30 Minuten (der Zeitraum kann insbesondere zwischen 5 und 60 Minuten und vorzugsweise zwischen 20 und 40 Minuten liegen) bei 350 bis 450 °C in einem Ofen gelagert. Das Erwärmen im Ofen erfolgte ohne eine Temperaturrampe zu durchlaufen. Anschließend wurden die wärmebehandelten Arbeitsbereiche in Wasser, das Raumtemperatur hatte, abgeschreckt. Aus dem hieraus erhaltenen Legierungsmaterial wurden durch Zerspanen Arbeitsbereiche für ein Wurzelkanalinstrument hergestellt. Tabelle 1 gibt ferner die physikalischen und mechanischen Eigenschaften der verwendeten Legierungen an.

**Tabelle 1**

| | Beispiel 1 | Vergleichsbeispiel 1 |
|---|---|---|
| Nickel | 42,50 At% | 50,10 At% |
| Titan | 49,90 At% | 49,90 At% |
| Kupfer | 7,50 At% | - |
| Chrom | 0,10 At% | - |
| Sauerstoff und Stickstoff | Max. 500 ppm | 220 ppm |
| Kohlenstoff | Max. 500 ppm | 320 ppm |
| Wasserstoff | Max. 50 ppm | 50 ppm |
| Dehnung | Mind. 30 % | 10% |
| Zugspannung | Mind. 800 MPa | 1100 MPa |
| Schmelzpunkt | 1310 °C | - |
| E-Modul (Austenit) | 25-35 GPa (60-80 GPa) | - |

Die Festigkeit und Dehnung wurden gemäß ASTM F 2516 Ausgabe 2018 bestimmt. Zur Ermittlung der max. Zugspannung (σ_{z}) wurde folgende Formel verwendet: σ_{z} = F / S (F= Kraft in MPa, S= Querschnittsfläche in mm²).

Die Ermittlung der Kraft (F) erfolgte auf einer Zug- und Druckprüfmaschine unter folgenden Parametern:
Traversengeschwindigkeit = 1 mm/min.
Referenzdurchmesser (Material) = 1,0 mm und 1,2 mm.

Das E-Modul wurde anhand des Zugversuchs als Steigung bis zum Fließen des Materials (beginnende plastische Verformung nach Hookscher Gerade) ermittelt.

Wie aus Tabelle 1 ersichtlich ist, zeichnet sich die Legierung aus Beispiel 1 durch eine besonders hohe Dehnung und Zugspannung aus, wodurch eine hohe Biegefähigkeit und Dehnfähigkeit erhalten werden. Somit ist auch ein aus der Legierung aus Beispiel 1 gebildeter Arbeitsbereich für ein Wurzelkanalinstrument durch eine besonders hohe Flexibilität gekennzeichnet.

### Bezugszeichenliste

- 1: Wurzelkanalinstrument
- 2: Schaft
- 3: Verbindungsbereich
- 4: Arbeitsbereich
- 5: Anschlussstück
- 6: erstes Ende
- 7: zweites Ende

## Patentansprüche

1. Wurzelkanalinstrument umfassend einen Schaft (2) und einen am Schaft (2) befestigten Arbeitsbereich (4), wobei der Arbeitsbereich (4) aus einer Nickel-Titan-Legierung besteht, die aus 38 bis 46 At% Nickel, 46 bis 53 At% Titan, 5,5 bis 8,8 At% Kupfer und 0,05 bis 0,15 At% Chrom besteht.

2. Wurzelkanalinstrument nach Anspruch 1, wobei die Nickel-Titan-Legierung aus 40,5 bis 43,1 At% Nickel, 48,7% bis 50,8 At% Titan, 6,3 bis 8,4 At% Kupfer und 0,08 bis 0,13 At% Chrom und insbesondere aus 42,50 At% Nickel, 49,90 At% Titan, 7,50 At% Kupfer und 0,10 At% Chrom besteht und/oder
wobei die Nickel-Titan-Legierung gemäß ASTM F 2063-15 maximal 500 ppm Sauerstoff und Stickstoff und/oder maximal 500 ppm Kohlenstoff und/oder maximal 50 ppm Wasserstoff umfasst.

3. Wurzelkanalinstrument nach einem der vorhergehenden Ansprüche, wobei die Nickel-Titan-Legierung zu 21 bis 40 %, insbesondere zu 35 % kaltverfestigt wurde.

4. Verfahren zur Herstellung eines Wurzelkanalinstruments (1) nach einem der vorhergehenden Ansprüche, umfassend die Schritte:
- Bereitstellen einer Nickel-Titan-Legierung, die aus 38 bis 46 At% Nickel, 46 bis 53 At% Titan, 5,5 bis 8,8 At% Kupfer und 0,05 bis 0,15 At% Chrom besteht, in Form eines Stranges,
- Bearbeiten des Stranges, um einen Arbeitsbereich (4) zu bilden und
- Verbinden des Arbeitsbereichs mit einem Schaft (2), wobei das Verbinden des Arbeitsbereichs (4) mit dem Schaft (2) insbesondere durch Verpressen, Schweißen oder Anspritzen ausgeführt wird.

5. Verfahren nach Anspruch 4, umfassend einen Schritt des Temperns der Nickel-Titan-Legierung in einem Temperaturbereich von 350 bis 450 °C oder umfassend einen Schritt des Wärmebehandelns der Nickel-Titan-Legierung mittels Induktion für 1 Sekunde bis 60 Sekunden bei einer Temperatur von 500 °C +- 20 °C.

6. Verfahren nach Anspruch 4 oder 5, wobei die Nickel-Titan-Legierung vor dem Bearbeiten des Stranges zu 21 bis 40 %, insbesondere zu 35 % kaltverfestigt wird.

7. Verfahren nach Anspruch 5 oder 6, umfassend einen Schritt des Quenchens der wärmebehandelten bzw. getemperten Nickel-Titan-Legierung auf Raumtemperatur, insbesondere unter Verwendung von Wasser.

8. Verwendung einer Nickel-Titan-Legierung, die aus 38 bis 46 At% Nickel, 46 bis 53 At% Titan, 5,5 bis 8,8 At% Kupfer und 0,05 bis 0,15 At% Chrom besteht, zur Herstellung eines Wurzelkanalinstruments (1).

## Claims

1. A root canal instrument comprising a shaft (2) and a working portion (4) attached to the shaft (2), wherein the working portion (4) is made of a nickel-titanium alloy consisting of 38 to 46 At% nickel, 46 to 53 At% titanium, 5.5 to 8.8 At% copper and 0.05 to 0.15 At% chromium.

2. The root canal instrument according to claim 1, wherein the nickel-titanium alloy consists of 40.5 to 43.1 At% nickel, 48.7 to 50.8 At% titanium, 6.3 to 8.4 At% copper and 0.08 to 0.13 At% chromium and in particular 42.50 At% nickel, 49.90 At% titanium, 7.50 At% copper and 0.10 At% chromium and/or
wherein the nickel-titanium alloy according to ASTM F 2063-15 comprises a maximum of 500 ppm oxygen and nitrogen and/or a maximum of 500 ppm carbon and/or a maximum of 50 ppm hydrogen.

3. The root canal instrument according to one of the preceding claims, wherein the nickel-titanium alloy has been cold worked by 21 to 40%, in particular by 35%.

4. A method for manufacturing a root canal instrument (1) according to one of the preceding claims, comprising the steps:
- providing a nickel-titanium alloy that is made of 38 to 46 At% nickel, 46 to 53 At% titanium, 5.5 to 8.8 At% copper and 0.05 to 0.15 At% chromium, in the form of a strand,
- machining the strand to form a working portion (4) and
- connecting the working portion to a shaft (2), wherein the connection of the working portion (4) to the shaft (2) is carried out in particular by pressing, welding or injection molding.

5. The method according to claim 4, comprising a step of tempering the nickel-titanium alloy in a temperature range of 350 to 450°C or comprising a step of heat-treating the nickel-titanium alloy by means of induction for 1 second to 60 seconds at a temperature of 500°C +-20°C.

6. The method according to claim 4 or 5, wherein the nickel-titanium alloy is cold worked to 21 to 40%, in particular to 35%, prior to machining the strand.

7. The method according to claim 5 or 6, comprising a step of quenching the heat-treated or tempered nickel-titanium alloy to room temperature, in particular using water.

8. A use of a nickel-titanium alloy made of 38 to 46 At% nickel, 46 to 53 At% titanium, 5.5 to 8.8 At% copper and 0.05 to 0.15 At% chromium for manufacturing a root canal instrument (1).

## Revendications

1. Instrument pour canal radiculaire comprenant une tige (2) et une zone de travail (4) fixée sur la tige (2), dans lequel la zone de travail (4) est constituée d'un alliage de nickel-titane, qui est constitué de 38 à 46 % at. de nickel, de 46 à 53 % at. de titane, de 5,5 à 8,8 % at. de cuivre et de 0,05 à 0,15 % at. de chrome.

2. Instrument pour canal radiculaire selon la revendication 1, dans lequel l'alliage de nickel-titane est constitué de 40,5 à 43,1 % at. de nickel, de 48,7 % à 50,8 % at. de titane, de 6,3 à 8,4 % at. de cuivre et de 0,08 à 0,13 % at. de chrome et en particulier de 42,50 % at. de nickel, de 49,90 % at. de titane, de 7,50 % at. de cuivre et de 0,10 % at. de chrome et/ou
dans lequel l'alliage de nickel-titane comprend selon la norme ASTM F 2063-15 un maximum de 500 ppm d'oxygène et d'azote et/ou un maximum de 500 ppm de carbone et/ou un maximum de 50 ppm d'hydrogène.

3. Instrument pour canal radiculaire selon l'une quelconque des revendications précédentes, dans lequel l'alliage de nickel-titane a été durci à froid à 21 à 40 %, en particulier à 35 %.

4. Procédé de fabrication d'un instrument pour canal radiculaire (1) selon l'une quelconque des revendications précédentes, comprenant les étapes :
- de mise à disposition d'un alliage de nickel-titane, qui est constitué de 38 à 46 % at. de nickel, de 46 à 53 % at. de titane, de 5,5 à 8,8 % at. de cuivre et de 0,05 à 0,15 % at. de chrome, sous la forme d'une ligne,
- d'usinage de la ligne pour former une zone de travail (4) et
- de raccordement de la zone de travail à une tige (2), dans lequel le raccordement de la zone de travail (4) à la tige (2) est réalisé notamment par compression, par soudage ou par pulvérisation.

5. Procédé selon la revendication 4, comprenant une étape de recuit de l'alliage de nickel-titane dans une plage de températures de 350 à 450 °C ou comprenant une étape de traitement thermique de l'alliage de nickel-titane par induction pendant 1 seconde à 60 secondes à une température de 500 °C +-20 °C.

6. Procédé selon la revendication 4 ou 5, dans lequel l'alliage de nickel-titane est durci à froid à 21 à 40 %, en particulier à 35 %, avant l'usinage de la ligne.

7. Procédé selon la revendication 5 ou 6, comprenant une étape de trempe de l'alliage de nickel-titane traité thermiquement ou recuit à température ambiante, en particulier en utilisant de l'eau.

8. Utilisation d'un alliage de nickel-titane, qui est constitué de 38 à 46 % at. de nickel, de 46 à 53 % at. de titane, de 5,5 à 8,8 % at. de cuivre et de 0,05 à 0,15 % at. de chrome pour la fabrication d'un instrument pour canal radiculaire (1).
